# EUROPEAN PATENT APPLICATION

(11) **EP 4 005 783 A1**
(43) Date of publication of application: **01.06.2022**
(21) Application number: 21203106.6
(22) Date of filing: 18.10.2021
(51) Int. Cl.: B29D 30/06, B60C 11/01, B60C 13/02

(54) **TIRE VULCANIZATION MOLD, METHOD FOR PRODUCING TIRE USING SAME, AND TIRE**

(30) Priority: 30.11.2020 JP 2020198255
(71) Applicant: Sumitomo Rubber Industries, Ltd., Kobe-shi, Hyogo-ken 651-0072 (JP)
(72) Inventor: OGIHARA, Sawa, Kobe-shi, 651-0072 (JP); SANAE, Ryuhei, Kobe-shi, 651-0072 (JP)
(74) Representative: Manitz Finsterwald Patent- und Rechtsanwaltspartnerschaft mbB

(57) **Abstract**

An object is to enhance the fuel economy performance of a tire while maintaining the outer appearance of the tire. The tire vulcanization mold 1 of the present invention includes a tread mold 2 having a tread molding surface 6, and side molds 3 having sidewall molding surfaces 7. A corner portion k1 of a butt surface 4 and the tread molding surface 6 of the tread mold 2 is rounded as a first arc 10. A corner portion k2 of a butt surface 5 and the sidewall molding surface 7 of the side mold 3 is rounded as a second arc 11. A radius of curvature R1 of the first arc 10 is 1.2 to 2.0 times a radius of curvature R2 of the second arc 11. The present invention also relates to a method for producing a tire and to a tire 20.

## Description

### BACKGROUND OF THE INVENTION

### Field of the Invention

The present invention relates to a tire vulcanization mold, a method for producing a tire using the tire vulcanization mold, and a tire.

### Description of the Background Art

Japanese Laid-Open Patent Publication No. 2016-198999 describes a tire vulcanization mold which includes a tread segment having a tread molding surface and a sidewall mold having a sidewall molding surface. The tread segment and the sidewall mold are combined with each other at separation surfaces thereof at the time of vulcanization. In addition, at least either one of the tread molding surface and the sidewall molding surface includes a first ridge portion which projects on the tire side from a position adjacent to the separation surfaces. The first ridge portion is formed of a first projection which extends in the tire circumferential direction with a first gap. Such a tire vulcanization mold is considered to suppress burrs that are formed by a rubber member being bitten between the separation surfaces.

In recent years, further improvement in the fuel economy performance of vehicles has been required. The inventors have found that by improving the shape of a projection portion on a tire outer surface formed at butt surfaces of a tire vulcanization mold, the air resistance of the tire during running can be reduced without impairing the outer appearance of the tire, which can further contribute to improvement in the fuel economy performance of a vehicle.

The present invention has been made in view of the above circumstances, and an object of the present invention is to provide a tire vulcanization mold, a method for producing a tire using the tire vulcanization mold, and a tire, which improve fuel economy performance while maintaining tire outer appearance.

### SUMMARY OF THE INVENTION

A first aspect of the present invention is directed to a tire vulcanization mold for vulcanizing and molding a tire including a tread portion and a pair of sidewall portions, the tire vulcanization mold including a tread mold having a tread molding surface for molding the tread portion and a pair of side molds having sidewall molding surfaces for molding the pair of sidewall portions, respectively, wherein: the tread mold and the pair of side molds include pairs of butt surfaces to be abutted against each other in a mold radial direction at a time of vulcanization and molding, on a right side and a left side in a mold axial direction, respectively; at at least one of the pairs of butt surfaces, a corner portion of the butt surface of the tread mold and the tread molding surface is rounded as a first arc, and a corner portion of the butt surface of the side mold and the sidewall molding surface is rounded as a second arc; and a radius of curvature R1 of the first arc is 1.2 to 2.0 times a radius of curvature R2 of the second arc.

In the tire vulcanization mold according to the present invention, preferably, when the tread mold and the side mold are abutted against each other at the butt surfaces thereof, a groove is formed between the first arc and the second arc so as to extend in a mold circumferential direction, and a depth of the groove with respect to a virtual side profile that smoothly connects the tread molding surface and the sidewall molding surface and that is composed of an arc that is convex outward in the mold axial direction is not greater than 2.0 mm.

In the tire vulcanization mold according to the present invention, the radius of curvature R2 of the second arc is preferably not greater than 5.0 mm.

In the tire vulcanization mold according to the present invention, the radius of curvature R2 of the second arc is preferably not less than 1.0 mm.

In the tire vulcanization mold according to the present invention, the radius of curvature R1 of the first arc is preferably not greater than 10 mm.

In the tire vulcanization mold according to the present invention, the radius of curvature R1 of the first arc is preferably not less than 2.0 mm.

In the tire vulcanization mold according to the present invention, between the butt surface of the side mold and a position away inward in the mold radial direction from the butt surface of the side mold by 10 mm, the sidewall molding surface preferably extends on the virtual side profile that smoothly connects the tread molding surface and the sidewall molding surface and that is composed of an arc that is convex outward in the mold axial direction.

In the tire vulcanization mold according to the present invention, between the butt surface of the tread mold and a position away outward in the mold radial direction from the butt surface of the tread mold by 10 mm, the tread molding surface preferably extends on the virtual side profile that smoothly connects the tread molding surface and the sidewall molding surface and that is composed of an arc that is convex outward in the mold axial direction.

In the tire vulcanization mold according to the present invention, a distance in the mold radial direction between the pair of butt surfaces and an outer end in the mold radial direction of the tread molding surface is preferably 10% to 30% of a distance in the mold radial direction between the outer end in the mold radial direction of the tread molding surface and a position in the mold radial direction corresponding to a bead base line of the tire set in the tire vulcanization mold.

A second aspect of the present invention is directed to a method for producing a tire, comprising a step of vulcanizing and molding a green tire by using any tire vulcanization mold described above.

A third aspect of the present invention is directed to a tire including a tread portion and a pair of sidewall portions connected to both sides in a tire axial direction of the tread portion, wherein: on at least either one of the pair of sidewall portions, the tire includes a raised portion that is raised from an outer surface and that extends in a tire circumferential direction; on a meridian cross-section of the tire, the raised portion includes a first arc portion that has an arc shape that is convex inward in a tire radial direction, and a second arc portion that is connected to an outer end in the tire axial direction of the first arc portion, that extends inward in the tire radial direction, and that has an arc shape that is convex outward in the tire radial direction; and a radius of curvature r1 of the first arc portion is 1.2 to 2.0 times a radius of curvature r2 of the second arc portion.

In the tire according to the present invention, a ratio (h/rl) of a height h of the raised portion to the radius of curvature r1 of the first arc portion is preferably 0.08 to 0.40.

In the tire according to the present invention, a ratio (h/r2) of a height h of the raised portion to the radius of curvature r2 of the second arc portion is preferably 0.1 to 0.8.

By having the above configuration, the tire vulcanization mold and the method for producing a tire according to the present invention allow a tire, which can have enhanced fuel economy performance while maintaining outer appearance, to be vulcanized and produced.

### BRIEF DESCRIPTION OF THE DRAWINGS

FIG. 1 is a cross-sectional view showing an embodiment of the tire vulcanization mold according to the present invention;
FIG. 2 is a partially enlarged view of a tire vulcanization mold in FIG. 1;
FIG. 3 is an enlarged cross-sectional view of a tire formed by using the tire vulcanization mold in FIG. 1; and
FIG. 4 is a partial cross-sectional view of a tire vulcanization mold according to another embodiment.

### DESCRIPTION OF THE PREFERRED EMBODIMENTS

Hereinafter, an embodiment of the present invention will be described with reference to the drawings.

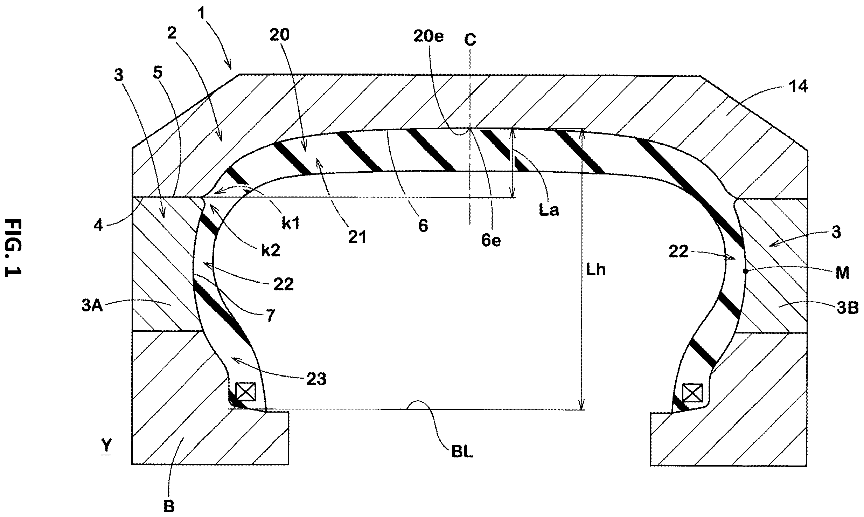

FIG. 1 is a cross-sectional view of a tire vulcanization mold (hereinafter, sometimes referred to simply as "mold") 1 and a tire (vulcanized tire) 20 set in the mold 1. FIG. 1 shows a tire cross section including the tire rotation axis (not shown) of the tire 20. In the mold 1 according to the present embodiment, a pneumatic tire for a passenger car is vulcanized and molded. The present invention may be applied to a mold for vulcanizing and molding a pneumatic tire for a heavy-duty vehicle or a pneumatic tire for a motorcycle.

In the mold 1 according to the present embodiment, the tire 20 is vulcanized and molded in a state where the tire 20 is horizontally laid down (the tire rotation axis is vertically directed).

As shown in FIG. 1, the mold 1 includes a tread mold 2 for molding a tread portion 21 of the tire 20, and a pair of side molds 3 for molding a pair of sidewall portions 22 of the tire 20. The tread mold 2 and the respective side molds 3 are brought into a mold closed state Y where the tread mold 2 and the respective side molds 3 are abutted against each other in a mold radial direction, at the time of vulcanization and molding of the tire 20. The mold 1 further includes, for example, bead molds B for molding bead portions 23 of the tire 20.

The pair of side molds 3 are disposed, for example, on both sides of the tread mold 2 in a mold axial direction. In the present embodiment, the pair of side molds 3 include a lower side mold 3A and an upper side mold 3B disposed above the lower side mold 3A.

In the present description, the "mold axial direction" is a direction that coincides with the tire axial direction of the tire 20 set in the mold 1. In the present description, the "mold radial direction" is a direction that coincides with the tire radial direction of the tire 20 set in the mold 1. In the present description, a "mold circumferential direction" is a direction that coincides with the tire circumferential direction of the tire 20 set in the mold 1.

The tread mold 2 has butt surfaces 4 which are abutted against the side molds 3 in the mold closed state Y, and a tread molding surface 6 for molding the tread portion 21. Each side mold 3 has a butt surface 5 which is abutted against the tread mold 2 in the mold closed state Y, and a sidewall molding surface 7 for molding the sidewall portion 22.

The tread mold 2 is formed so as to include, for example, a plurality of segments 14 which are separable in the mold circumferential direction. Each segment 14 is configured, for example, so as to be able to be enlarged or reduced in diameter in the mold radial direction.

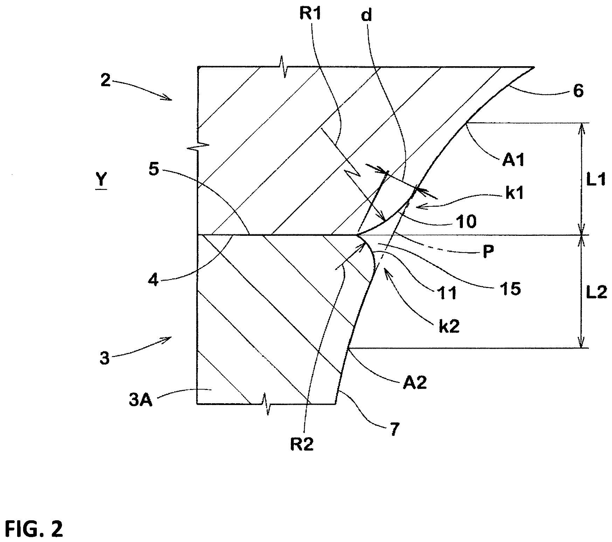

FIG. 2 is an enlarged view of a portion where the lower side mold 3A and the tread mold 2 are abutted against each other in the mold closed state Y. As shown in FIG. 1 and FIG. 2, in the tread mold 2, a corner portion k1 of the butt surface 4 and the tread molding surface 6 of the tread mold 2 is rounded as a first arc 10. In the lower side mold 3A, a corner portion k2 of the butt surface 5 and the sidewall molding surface 7 of the side mold 3 is rounded as a second arc 11. The second arc 11 may be formed only in the upper side mold 3B or may be formed in each of the pair of side molds 3. In addition, the first arc 10 is provided adjacent to the second arc 11 so as to face the second arc 11.

These corner portions k1 and k2 ensure a distance between a green tire (not shown) put into the mold 1 and the butt surfaces 4 and 5 at the time of vulcanization and molding to inhibit the green tire from being bitten between the butt surfaces 4 and 5 (hereinafter, sometimes referred to as "bite resistance"). Accordingly, the generation of burrs at the butt surfaces 4 and 5 is suppressed. In addition, the first arc 10 and the second arc 11 of such butt surfaces 4 and 5 can absorb the unevenness of the tire surface due to misalignment in the mold axial direction between the tread mold 2 or the side mold 3. Due to these facts, the mold 1 according to the present embodiment allows the tire 20 having excellent outer appearance to be vulcanized and molded.

During running of a tire, the air flow velocity is higher at an outer portion in the radial direction of the tire than at an inner portion thereof, and the outer portion has a greater effect on air resistance. In the present embodiment, a radius of curvature R1 of the first arc 10 is set so as to be 1.2 to 2.0 times a radius of curvature R2 of the second arc 11. Accordingly, a surface, of the tire 20, formed by the first arc 10 (first arc portion 26 described later) is relatively closer to being straight than a surface, of the tire 20, formed by the second arc 11 (second arc portion 27 described later), so that the air flow thereon is made smooth. Therefore, the tire 20 vulcanized and molded by using the mold 1 according to the present embodiment can reduce the air resistance during running and improve the fuel economy performance of a vehicle.

In order to smooth the air flow on the tire 20 during running, the radius of curvature R1 of the first arc 10 is preferably not less than 2.0 mm. In addition, the radius of curvature R1 of the first arc 10 is preferably not greater than 10 mm. Accordingly, an effect of reducing the mass of the tire 20 is achieved, so that the fuel economy performance of the tire 20 is improved. In addition, the outer appearance of the tire 20 is also improved. Therefore, the radius of curvature R1 of the first arc 10 is more preferably not greater than 5.0 mm.

From the same viewpoint, the radius of curvature R2 of the second arc 11 is preferably not greater than 5.0 mm and more preferably not greater than 3.0 mm. In addition, when the radius of curvature R2 of the second arc 11 is excessively small, rubber biting cannot be suppressed, and the air resistance may be increased. Therefore, the radius of curvature R2 of the second arc 11 is preferably not less than 1.0 mm.

In the present embodiment, the first arc 10 and the second arc 11 are formed as arcs having the same radius of curvature. The first arc 10 and the second arc 11 are not limited to such a mode, and, for example, one or both of the first arc 10 and the second arc 11 may be formed such that a plurality of arcs having different radii of curvature are aligned. In this case, as each of the radius of curvature R1 of the first arc 10 and the radius of curvature R2 of the second arc 11, the radius of curvature of the arc having the longest arc length may be adopted.

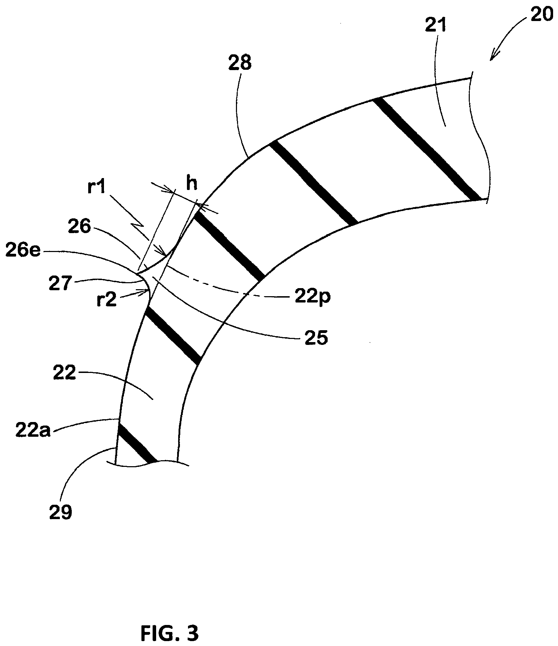

FIG. 3 is an enlarged view of the tire 20 vulcanized and molded by using such a mold 1. FIG. 3 shows a portion, of the tire 20, formed by the corner portions k1 and k2. As shown in FIG. 1 and FIG. 3, in the tire 20, a raised portion 25 is formed on at least either one of the pair of sidewall portions 22, in the present embodiment, on each of both of the sidewall portions 22, so as to be raised from an outer surface 22a thereof and extend in the tire circumferential direction.

In the present embodiment, the raised portion 25 is formed of the first arc portion 26 and the second arc portion 27. The first arc portion 26 of the present embodiment is an arc-shaped portion that is convex inward in the tire radial direction. The second arc portion 27 of the present embodiment is an arc-shaped portion that is connected to an outer end 26e in the tire axial direction of the first arc portion 26, that extends inward in the tire radial direction, and that is convex outward in the tire radial direction. The first arc portion 26 of the present embodiment is a portion formed by the first arc 10. A radius of curvature r1 of the first arc portion 26 is preferably equal to the radius of curvature R1 of the first arc 10. The second arc portion 27 of the present embodiment is a portion formed by the second arc 11. A radius of curvature r2 of the second arc portion 27 is preferably equal to the radius of curvature R2 of the second arc 11.

In the present description, dimensions and the like of components of the tire 20 are values measured in a normal state. The "normal state" is a state where the tire 20 is fitted on a normal rim (not shown) and inflated to a normal internal pressure and no load is applied to the tire 20.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The first arc portion 26 is smoothly connected to, for example, an outer arc portion 28, of the tire 20, which is convex outward. The second arc portion 27 is smoothly connected to, for example, an inner arc portion 29, of the tire 20, which is convex outward. The outer arc portion 28 is a portion formed by the tread molding surface 6 of the tread mold 2. The inner arc portion 29 is a portion formed by the sidewall molding surface 7 of the side mold 3.

In order to improve bite resistance, reduce air resistance, and suppress concentration of strain or stress on the raised portion 25 regardless of whether the tread mold 2 and the side mold 3A are misaligned with each other, the dimensions of the tire 2 are preferably specified as follows. A value (h/rl) obtained by dividing a height h of the raised portion 25 by the radius of curvature r1 of the first arc portion 26 is preferably not less than 0.08, more preferably not less than 0.12, and further preferably not less than 0.16, and is preferably not greater than 0.40, more preferably not greater than 0.36, and further preferably not greater than 0.32. In addition, a value (h/r2) obtained by dividing the height h of the raised portion 25 by the radius of curvature r2 of the second arc portion 27 is preferably not less than 0.1, more preferably not less than 0.2, and further preferably not less than 0.3, and is preferably not greater than 0.8, more preferably not greater than 0.7, and further preferably not greater than 0.6.

As shown in FIG. 2, in the mold closed state Y, a groove 15 is formed between the first arc 10 and the second arc 11 so as to extend in the mold circumferential direction. In addition, in the mold closed state Y, a virtual side profile P which smoothly connects the tread molding surface 6 and the sidewall molding surface 7 and which is composed of an arc that is convex outward in the mold axial direction, is formed.

A depth d of the groove 15 with respect to the virtual side profile P is preferably not greater than 2.0 mm. Accordingly, in the tire 20 molded by using the mold 1 according to the present embodiment, the height h (shown in FIG. 3) of the raised portion 25 is not greater than 2.0 mm, so that the air resistance can be reduced to be small. In order to effectively suppress biting of the green tire between the butt surfaces 4 and 5 at the time of vulcanization and molding, the depth d of the groove 15 is preferably not less than 0.4 mm. In addition, in order to absorb the unevenness of the tire surface, the height h of the raised portion 25 is preferably not less than 0.4 mm. The height h of the raised portion 25 is a height from a virtual profile 22p of the sidewall portion 22. The virtual profile 22p is formed so as to overlap the virtual side profile P. In order to further enhance such an effect, the depth d of the groove 15 with respect to the virtual side profile P is further preferably not less than 0.8 mm and is further preferably not greater than 1.6 mm.

The groove 15 extends, for example, continuously in the mold circumferential direction. Such a groove 15 effectively suppresses the generation of burrs. The groove 15 is not limited to such a mode, and, for example, grooves 15 may be provided so as to be spaced apart from each other in the mold circumferential direction.

Between the butt surface 4 of the tread mold 2 and a position A1 away outward in the mold radial direction from the butt surface 4 of the tread mold 2 by a distance L1 of 10 mm, the tread molding surface 6 preferably extends on the virtual side profile P. In other words, between the butt surface 4 and the position A1, no recess recessed from the virtual side profile P or no projection projecting from the virtual side profile P is preferably provided on the tread molding surface 6. Accordingly, the reduction in air resistance is maintained.

Between the butt surface 5 of the side mold 3 and a position A2 away inward in the mold radial direction from the butt surface 5 of the side mold 3 by a distance L2 of 10 mm, the sidewall molding surface 7 preferably extends on the virtual side profile P. In other words, between the butt surface 5 and the position A2, no recess recessed from the virtual side profile P or no projection projecting from the virtual side profile P is preferably provided on the sidewall molding surface 7. Accordingly, the reduction in air resistance is maintained.

As shown in FIG. 1, in the mold closed state Y, a distance La is set to be 10% to 30% of a distance Lh in the present embodiment. The distance La is the distance in the mold radial direction between the butt surface 4 and an outer end 6e in the mold radial direction of the tread molding surface 6. The distance Lh is the distance in the mold radial direction between the outer end 6e of the tread molding surface 6 and a position in the mold radial direction corresponding to a bead base line BL of the tire 20 set in the mold 1. In other words, the distance Lh corresponds to a tire cross-section height of the tire 20 molded by using the mold 1. In addition, the distance La corresponds to the distance in the tire radial direction from an outer end 20e in the tire radial direction of the tire 20 to the outer end 26e (shown in FIG. 3) of the raised portion 25 formed by the groove 15.

Since the distance La is not less than 10% of the distance Lh, when a lateral groove (not shown) is formed so as to extend from the tread portion 21 to the sidewall portion 22, the length of the lateral groove can be large, so that the visibility of the tire is enhanced, and the outer appearance of the tire is improved. The lateral groove is formed so as to terminate on the outer side in the tire radial direction with respect to the raised portion 25. Since the distance La is not greater than 30% of the distance Lh, the raised portion 25 is disposed at a position greatly away from a tire maximum width position M, so that the reduction in air resistance is maintained, and cracks and chips that occur in the raised portion 25 are suppressed. From such a viewpoint, the distance La is further preferably not less than 15% of the distance Lh, and is further preferably not greater than 25% of the distance Lh.

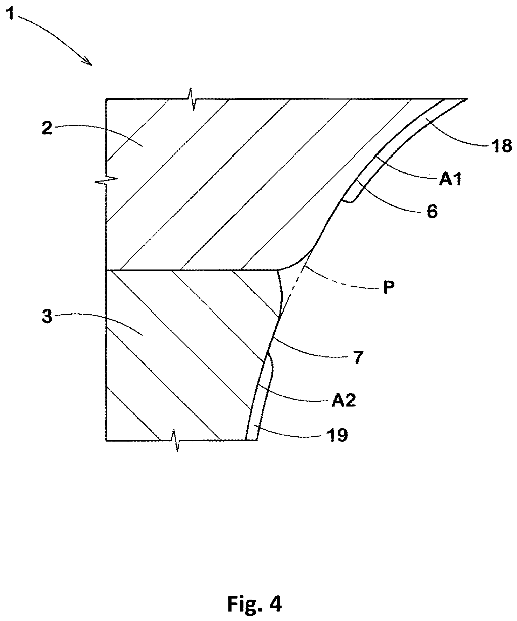

FIG. 4 is an enlarged cross-sectional view of a mold 1 according to another embodiment. The same parts as those of the mold 1 according to the present embodiment are designated by the same reference characters, and the description thereof is sometimes omitted. As shown in FIG. 4, in the mold 1 according to this embodiment, an outer projection portion 18 is formed on the tread mold 2 so as to project from the tread molding surface 6 and the virtual side profile P. For example, outer projection portions 18 may be provided so as to be spaced apart from each other in the mold circumferential direction. The outer projection portion 18 forms, for example, a known lateral groove (not shown) extending from the tread portion 21 to the sidewall portion 22 of the tire 20. In this embodiment, the outer projection portion 18 is disposed inward of the position A1 in the mold radial direction.

Moreover, in the mold 1 according to this embodiment, an inner projection portion 19 is formed on the side mold 3 so as to project from the sidewall molding surface 7 and the virtual side profile P. For example, inner projection portions 19 may be provided so as to be spaced apart from each other in the mold circumferential direction. The inner projection portion 19 forms, for example, a known serration (not shown) disposed at the sidewall portion 22 of the tire 20. In this embodiment, the inner projection portion 19 is disposed outward of the position A2 in the mold radial direction.

Although the particularly preferred embodiments of the present invention have been described in detail above, the present invention is not limited to the illustrated embodiments, and various modifications can be made to practice the present invention.

### EXAMPLES

Tire vulcanization molds having the structure shown in FIG. 1 were produced as sample molds on the basis of specifications in Table 1. Then, pneumatic tires were produced by using the tire vulcanization molds, and were tested for fuel economy performance, tire outer appearance, and tire durability. The test methods are as follows.
Tire size: 205/55R16
Mount rim: 16×6.5J
Tire internal pressure: 250 kPa for all wheels

### <Fuel Economy Performance>

The tires produced by using each sample mold were mounted to the following test vehicle. Then, the fuel consumption when this test vehicle was caused to run was calculated. The results are indicated as indexes with the fuel consumption of Example 1 being regarded as 100. A higher value indicates that the fuel economy performance is better, and a value of 96 or higher is a passing value.
Test vehicle: a front-wheel-drive car having an engine displacement of 1600 cc
Tire mounted position: all wheels

### <Outer Appearance>

The molding state near the raised portion of the tire produced by using each sample mold and the ease of noticing misalignment in the tire were evaluated through sensory evaluation by a tester. The results are indicated as scores with the result of Example 1 being regarded as 100. As for both the molding state and the ease of noticing, a higher value indicates that the result is better, and a value of 96 or higher is a passing value.

### <Durability>

The above test vehicle was caused to run. After the running was ended, the state of cracks that occurred in the raised portion was evaluated through sensory evaluation by a tester. The results are indicated as scores with the result of Example 1 being regarded as 100. A higher value indicates that the durability is better, and a value of 96 or higher is a passing value.
Running distance: 10000 km

The test results are shown in Table 1. "A" described in test items indicates that tires formed without misalignment between the tread mold and the side mold were evaluated. In addition, "B" described in test items indicates that tires formed with misalignment between the tread mold and the side mold were evaluated.

**[Table 1]**

| | Comparative Example 1 | Comparative Example 2 | Comparative Example 3 | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| R1 (mm) | 3.3 | 0.6 | 4.2 | 3.0 | 3.6 | 5.0 | 5.5 | 4.0 | 4.0 | 3.0 | 3.0 | 3.0 | 3.0 |
| R2 (mm) | 3.0 | 1.0 | 2.0 | 2.0 | 3.0 | 2.5 | 2.8 | 3.0 | 3.2 | 2.0 | 2.0 | 2.0 | 2.0 |
| R1/R2 (%) | 1.1 | 0.6 | 2.1 | 1.5 | 1.2 | 2.0 | 2.0 | 1.3 | 1.3 | 1.5 | 1.5 | 1.5 | 1.5 |
| La/Lh (%) | 20 | 20 | 20 | 20 | 20 | 20 | 20 | 20 | 20 | 5 | 35 | 20 | 20 |
| d (mm) | 2.0 | 2.0 | 2.0 | 2.0 | 2.0 | 2.0 | 2.0 | 2.0 | 2.0 | 2.0 | 2.0 | 2.5 | 0.4 |
| Height of inner projection portion (mm) | - | - | - | - | - | - | - | - | - | - | - | - | - |
| A. Outer appearance (burrs) [score: higher value is better] | 95 | 90 | 100 | 100 | 100 | 105 | 105 | 100 | 100 | 100 | 100 | 100 | 100 |
| A. Fuel economy performance [index higher value is better] | 95 | 90 | 95 | 100 | 98 | 98 | 98 | 100 | 100 | 100 | 100 | 97 | 100 |
| A. Durability [score: higher value is better] | 95 | 90 | 95 | 100 | 100 | 97 | 96 | 100 | 100 | 100 | 97 | 98 | 100 |
| A. Outer appearance (visibility of lateral groove) [score: higher value is better] | 100 | 100 | 100 | 100 | 100 | 100 | 100 | 100 | 100 | 97 | 103 | 100 | 100 |
| B. Outer appearance (absorption of misalignment) [score: higher value is better] | 95 | 95 | 90 | 100 | 98 | 100 | 100 | 98 | 98 | 100 | 100 | 100 | 96 |
| B. Durability [score: higher value is better] | 95 | 90 | 95 | 100 | 100 | 97 | 96 | 97 | 94 | 100 | 97 | 100 | 100 |
| Combined [Total score: higher value is better] | 575 | 555 | 575 | 600 | 596 | 597 | 595 | 597 | 594 | 597 | 597 | 595 | 596 |

As shown in Table 1, it is confirmed that the mold of each Example is a mold with which a tire having enhanced fuel economy performance while maintaining outer appearance can be produced, as compared to the mold of each Comparative Example.

## Claims

1. A tire vulcanization mold (1) for vulcanizing and molding a tire (20) including a tread portion (21) and a pair of sidewall portions (22), the tire vulcanization mold (1) comprising:
a tread mold (2) having a tread molding surface (6) for molding the tread portion (21); and
a pair of side molds (3) having sidewall molding surfaces (7) for molding the pair of sidewall portions (22), respectively, wherein
the tread mold (2) and the pair of side molds (3) include pairs of butt surfaces (4, 5) to be abutted against each other in a mold radial direction at a time of vulcanization and molding, on a right side and a left side in a mold axial direction, respectively,
at at least one of the pairs of butt surfaces (4, 5),
a corner portion (k1) of the butt surface (4) of the tread mold (2) and the tread molding surface (6) is rounded as a first arc (10), and
a corner portion (k2) of the butt surface (5) of the side mold (3) and the sidewall molding surface (7) is rounded as a second arc (11), and
a radius of curvature R1 of the first arc (10) is 1.2 to 2.0 times a radius of curvature R2 of the second arc (11).

2. The tire vulcanization mold (1) according to claim 1, wherein
when the tread mold (2) and the side mold (3) are abutted against each other at the butt surfaces (4, 5) thereof, a groove (15) is formed between the first arc (10) and the second arc (11) so as to extend in a mold circumferential direction, and
a depth (d) of the groove (15) with respect to a virtual side profile (P) that smoothly connects the tread molding surface (6) and the sidewall molding surface (7) and that is composed of an arc that is convex outward in the mold axial direction is not greater than 2.0 mm.

3. The tire vulcanization mold (1) according to claim 1 or 2, wherein the radius of curvature R2 of the second arc (11) is not greater than 5.0 mm.

4. The tire vulcanization mold (1) according to any one of claims 1 to 3, wherein the radius of curvature R2 of the second arc (11) is not less than 1.0 mm.

5. The tire vulcanization mold (1) according to any one of claims 1 to 4, wherein the radius of curvature R1 of the first arc (10) is not greater than 10 mm.

6. The tire vulcanization mold (1) according to any one of claims 1 to 5, wherein the radius of curvature R1 of the first arc (10) is not less than 2.0 mm.

7. The tire vulcanization mold (1) according to any one of claims 1 to 6, wherein
between the butt surface (5) of the side mold (3) and a position (A2) away inward in the mold radial direction from the butt surface (5) of the side mold (3) by 10 mm,
the sidewall molding surface (7) extends on the virtual side profile (P) that smoothly connects the tread molding surface (6) and the sidewall molding surface (7) and that is composed of an arc that is convex outward in the mold axial direction.

8. The tire vulcanization mold (1) according to any one of claims 1 to 7, wherein
between the butt surface (4) of the tread mold (2) and a position (A1) away outward in the mold radial direction from the butt surface (4) of the tread mold (2) by 10 mm,
the tread molding surface (6) extends on the virtual side profile (P) that smoothly connects the tread molding surface (6) and the sidewall molding surface (7) and that is composed of an arc that is convex outward in the mold axial direction.

9. The tire vulcanization mold (1) according to any one of claims 1 to 8, wherein a distance (La) in the mold radial direction between the pair of butt surfaces (4, 5) and an outer end (6e) in the mold radial direction of the tread molding surface (6) is 10% to 30% of a distance (Lh) in the mold radial direction between the outer end (6e) in the mold radial direction of the tread molding surface (6) and a position in the mold radial direction corresponding to a bead base line (BL) of the tire (20) set in the tire vulcanization mold (1).

10. A method for producing a tire (20), comprising a step of vulcanizing and molding a green tire by using the tire vulcanization mold (1) according to any one of claims 1 to 9.

11. A tire (20) comprising a tread portion (21) and a pair of sidewall portions (22) connected to both sides in a tire axial direction of the tread portion (21), wherein
on at least either one of the pair of sidewall portions (22), the tire (20) includes a raised portion (25) that is raised from an outer surface (22a) and that extends in a tire circumferential direction,
on a meridian cross-section of the tire (20),
the raised portion (25) includes a first arc portion (26) that has an arc shape that is convex inward in a tire radial direction, and a second arc portion (27) that is connected to an outer end in the tire axial direction of the first arc portion (26), that extends inward in the tire radial direction, and that has an arc shape that is convex outward in the tire radial direction, and
a radius of curvature r1 of the first arc portion (26) is 1.2 to 2.0 times a radius of curvature r2 of the second arc portion (27).

12. The tire (20) according to claim 11, wherein a ratio (h/rl) of a height h of the raised portion (25) to the radius of curvature r1 of the first arc portion (26) is 0.08 to 0.40.

13. The tire (20) according to claim 11, wherein a ratio (h/r2) of a height h of the raised portion (25) to the radius of curvature r2 of the second arc portion (27) is 0.1 to 0.8.
